(19) Europäisches Patentamt
European Patent Office
Office européen des brevets

(11) **EP 4 152 846 A1**

(12) **EUROPEAN PATENT APPLICATION**
published in accordance with Art. 153(4) EPC

(43) Date of publication:
**22.03.2023 Bulletin 2023/12**

(21) Application number: **20935544.5**

(22) Date of filing: **14.05.2020**

(51) International Patent Classification (IPC):
**H04W 72/04** (2009.01)

(52) Cooperative Patent Classification (CPC):
**H04W 72/04**

(86) International application number:
**PCT/JP2020/019366**

(87) International publication number:
**WO 2021/229779 (18.11.2021 Gazette 2021/46)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **NTT DOCOMO, INC.**
**Chiyoda-Ku**
**Tokyo 100-6150 (JP)**

(72) Inventors:
• **KURITA Daisuke**
**Tokyo 100-6150 (JP)**
• **TAKAHASHI Yuki**
**Tokyo 100-6150 (JP)**
• **HARADA Hiroki**
**Tokyo 100-6150 (JP)**

(74) Representative: **Hoffmann Eitle**
**Patent- und Rechtsanwälte PartmbB**
**Arabellastraße 30**
**81925 München (DE)**

(54) **TERMINAL**

(57) A terminal receives a physical downlink control channel, and assumes that a size of control information transmitted via the physical downlink control channel is small in a second state different from a first state.

FIG. 7

| Field (Item) | DCI 0_0 | DCI 0_1 | DCI 0_2 | DCI 0_x |
|---|---|---|---|---|
| Identifier for DCI formats | 1 | 1 | 1 | 1 |
| Carrier indicator | – | 0, 3 | 0, 1, 2, 3 | |
| UL/SUL Indicator | 0, 1 | 0, 1 | 0, 1 | |
| Bandwidth part indicator | – | 0, 1, 2 | 0, 1, 2 | |
| Frequency domain resource assignment | Variable | Variable | Variable | Variable |
| Time domain resource assignment | 4 | | 0, 1, 2, 3, 4, 5, 6 | 0, 1, 2, 3, 4 |
| Frequency Hopping Flag | 1 | 0, 1 | 0, 1 | 0, 1 |
| Modulation and coding scheme | 5 | 5 | 5 | 2 |
| New data indicator | 1 | 1 | 1 | 1 |
| Redundancy version | 2 | 2 | 0, 1, 2 | |
| HARQ process number | 4 | 4 | 0, 1, 2, 3, 4 | |
| Dwonlink assignment index (DAI) | – | 1, 2, 4 | 0, 1, 2, 4 | |
| 1st Downlink assignment index | – | 1, 2 | 1, 2 | |
| 2nd Downlink assignment index | – | 0, 2 | 0, 2 | |
| TPC command for scheduled PUSCH | 2 | 2 | 2 | 0, 2 |
| SRS resource indicator | – | 0, 1, 2, 3, 4 | 0, 1, 2, 3, 4 | |
| Precoding information and number of layers | – | 0, 1, 2, 3, 4, 5, 6 | | |
| Antenna ports | – | 2, 3, 4, 5 | 0, 2, 3, 4, 5 | |
| SRS request | – | 2, 3 | 0, 2, 3 | |
| CSI request | – | 0, 1, 2, 3, 4, 5, 6 | 0, 1, 2, 3, 4, 5, 6 | |
| CBG transmission information | – | 0, 2, 4, 6, 8 | 0, 2, 4, 6, 8 | |
| PTRS-DMRS Association | – | 0, 2 | 0, 2 | |
| beta_offsetr Indicator | – | 0, 2 | 0, 1, 2 | |
| DMRS Sequence Initialization | – | 0, 1 | 0, 1 | |
| UL-SCH Indicator | – | 1 | 1 | 1 |

**Description**

Technical Field

The present disclosure relates to a terminal that receives a physical downlink control channel.

Background Art

The 3rd Generation Partnership Project (3GPP) has specified the 5th generation mobile communication system (5G, also called New Radio (NR) or Next Generation (NG)), and also specified the next generation called Beyond 5G, 5G Evolution, or 6G.

For example, it is agreed to study coverage enhancement (CE) in NR in 3GPP Release-17 (Non Patent Literature 1).

Citation List

Non Patent Literature

Non Patent Literature 1: "New SID on NR coverage enhancement", RP-193240, 3GPP TSG RAN Meeting #86, 3GPP, December 2019

Summary of Invention

As a result of evaluating a maximum attenuation amount (MCL: Maximum Coupling Loss) of physical channels (PDSCH (Physical Downlink Shared Channel), PUSCH (Physical Uplink Shared Channel), PDCCH (Physical Downlink Control Channel), and PUCCH (Physical Uplink Control Channel)) for implementation of the coverage enhancement in NR, it has been found out that there is room for improvement at least for PDCCH (physical downlink control channel).

Therefore, the following disclosure has been made in view of such a situation, and aims to provide a terminal that can normally receive PDCCH supporting coverage enhancement.

One aspect of the present disclosure is a terminal (UE 200) including: a receiving unit (radio signal transceiver 210) that receives a physical downlink control channel; and a control unit (control unit 270) that assumes that a size of control information transmitted via the physical downlink control channel is small in a second state different from a first state.

One aspect of the present disclosure is a terminal (UE 200) including: a receiving unit (radio signal transceiver 210) that receives a physical downlink control channel; and a control unit (control unit 270) that assumes that at least any of resources in a frequency direction and a time direction of the physical downlink control channel increases in a second state different from a first state.

Brief Description of Drawings

Fig. 1 is an overall schematic configuration diagram of a radio communication system 10.

Fig. 2 is a view illustrating a configuration example of a radio frame, a sub frame, and a slot used in a radio communication system 10.

Fig. 3 is a functional block configuration diagram of a UE 200.

Fig. 4 is a view illustrating an MCL evaluation result of a physical channel in FR1.

Fig. 5 is a view illustrating an MCL evaluation result of a physical channel in FR2.

Fig. 6 is a view illustrating an assignment example of frequency/time resources for each of PDCCH, SCH, and PUCCH.

Fig. 7 is a view illustrating an example of a DCI format for PUSCH scheduling (including DCI 0_x supporting coverage enhancement).

Fig. 8 is a view illustrating an example of a DCI format for PDSCH scheduling (including DCI 1_x supporting coverage enhancement).

Fig. 9A is a view illustrating a configuration example (Part 1) of the number of OFDM symbols for PDCCH ($N_{symb}^{CORESET}$) according to an REG bundle size, an REG bundle, and CCE.

Fig. 9B is a view illustrating a configuration example (Part 2) of the number of OFDM symbols for PDCCH ($N_{symb}^{CORESET}$) according to the REG bundle size, the REG bundle, and CCE.

Fig. 9C is a view illustrating a configuration example (Part 3) of the number of OFDM symbols for PDCCH (N_symb^CORESET) according to the REG bundle size, the REG bundle, and CCE.

Fig. 10 is a view illustrating a configuration example of ControlResourceSet according to Operation Example 2-1.

Fig. 11 is a view illustrating a configuration example of the number of OFDM symbols for PDCCH (N_symb^CORESET), CCE, and an aggregation according to Operation Example 2-2.

Fig. 12 is a view illustrating a configuration example of ControlResourceSet according to Operation Example 2-2.

Fig. 13 is a view illustrating a configuration example of the number of OFDM symbols for PDCCH (N_symb^CORESET), CCE, and a repetition according to Operation Example 2-3.

Fig. 14 is a view illustrating BLER characteristics when the number of OFDM symbols to which PDCCH is assigned and a payload size of PDCCH are changed.

Fig. 15 is a diagram illustrating an example of a hardware configuration of the UE 200.

Description of Embodiments

Hereinafter, an embodiment will be described with reference to the drawings. Note that the same functions and configurations are denoted by the same or similar reference signs, and the description thereof will be omitted as appropriate.

(1) Overall schematic configuration of radio communication system

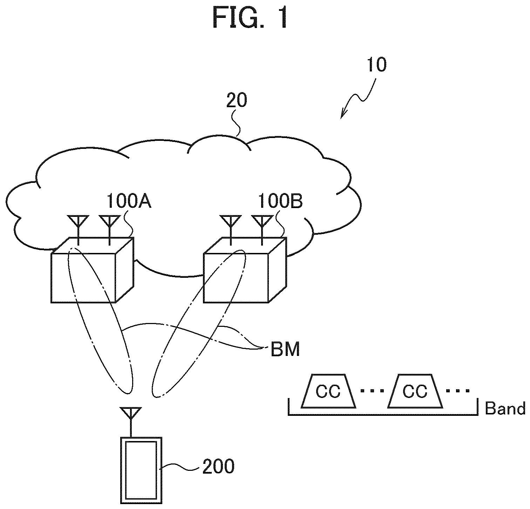

Fig. 1 is an overall schematic configuration diagram of a radio communication system 10 according to the present embodiment. The radio communication system 10 is a radio communication system according to 5G New Radio (NR), and includes: a next generation-radio access network 20 (hereinafter, NG-RAN 20; and a terminal 200 (User Equipment 200, hereinafter, the UE 200).

Note that the radio communication system 10 may be a radio communication system according to a system called Beyond 5G, 5G Evolution, or 6G.

The NG-RAN 20 includes a radio base station 100A (hereinafter, the gNB 100A) and a radio base station 100B (hereinafter, the gNB 100B). Note that a specific configuration of the radio communication system 10 including the number of gNBs and the number of UEs is not limited to the example illustrated in Fig. 1.

In practice, the NG-RAN 20 includes a plurality of NG-RAN nodes, specifically, gNBs, and is connected to a 5G-compliant core network (5GC, not illustrated). Note that the NG-RAN 20 and 5GC may be simply expressed as a "network".

The gNB 100A and the gNB 100B are radio base stations according to NR, and execute radio communication according to NR with the UE 200. The gNB 100A, the gNB 100B, and the UE 200 can support massive MIMO that generates a beam having a higher directivity, carrier aggregation (CA) using a plurality of component carriers (CC) in a bundle, dual connectivity (DC) that performs simultaneous communication between the UE and each of the plurality of NG-RAN nodes, and the like by controlling a radio signal transmitted from a plurality of antenna elements.

The radio communication system 10 corresponds to FR1 and FR2. A frequency band of each FR is given as follows.

- FR1: 410 MHz to 7.125 GHz
- FR2: 24.25 GHz to 52.6 GHz

In FR1, a sub-carrier spacing (SCS) of 15, 30, or 60 kHz may be used, and a bandwidth (BW) of 5 to 100 MHz may be used. FR2 is a higher frequency than FR1, SCS of 60 or 120 kHz (240 kHz may be included) may be used, and s bandwidth (BW) of 50 to 400 MHz may be used.

Furthermore, the radio communication system 10 may also support a frequency band higher than the frequency band of FR2. Specifically, the radio communication system 10 can support a frequency band exceeding 52.6 GHz up to 114.25 GHz.

In addition, Cyclic Prefix-Orthogonal Frequency Division Multiplexing (CP-OFDM)/Discrete Fourier Transform-Spread (DFT-S-OFDM) having a larger sub-carrier spacing (SCS) may be applied. Furthermore, DFT-S-OFDM may be applied to a downlink (DL) as well as an uplink (UL).

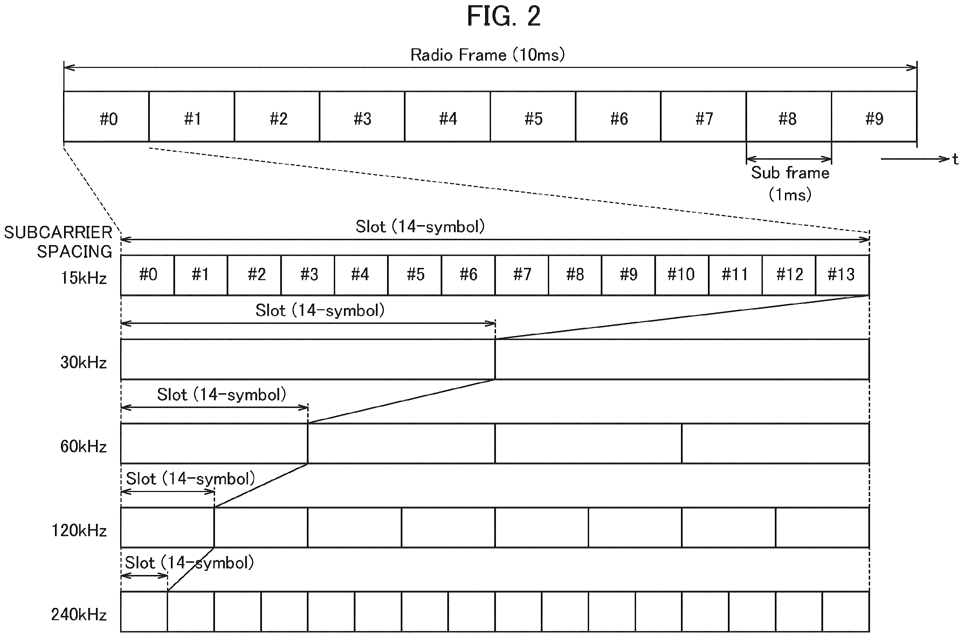

Fig. 2 illustrates a configuration example of a radio frame, a sub frame, and a slot used in the radio communication system 10.

As illustrated in Fig. 2, one slot is constituted by fourteen symbols. The larger (wider) the SCS is, the shorter a symbol period (and a slot period) is. Note that the number of symbols constituting one slot is not necessarily fourteen symbols (for example, 28 or 56 symbols). In addition, the number of slots per sub frame may differ depending on the SCS.

Note that a time direction (t) illustrated in Fig. 2 may be called a time domain, a symbol period, a symbol time, or the like. In addition, a frequency direction may be called a frequency domain, a resource block, a subcarrier, a BWP (Bandwidth part), or the like.

In addition, the radio communication system 10 can support coverage enhancement (CE) to expand the coverage of a cell formed by the gNB 100A (and the gNB 100B, hereinafter the same). The coverage enhancement may provide a mechanism for increasing a reception success rate of various physical channels.

In the present embodiment, in order to support the coverage enhancement, the radio communication system 10 can support an assignment change of resources (frequency direction and/or time direction) of a predetermined physical channel, improvement of power density (PSD: Power Spectrum Density), improvement of channel estimation accuracy, and the like.

(2) Functional block configuration of radio communication system

Next, a functional block configuration of the radio communication system 10 will be described. Specifically, a functional block configuration of the UE 200 will be described.

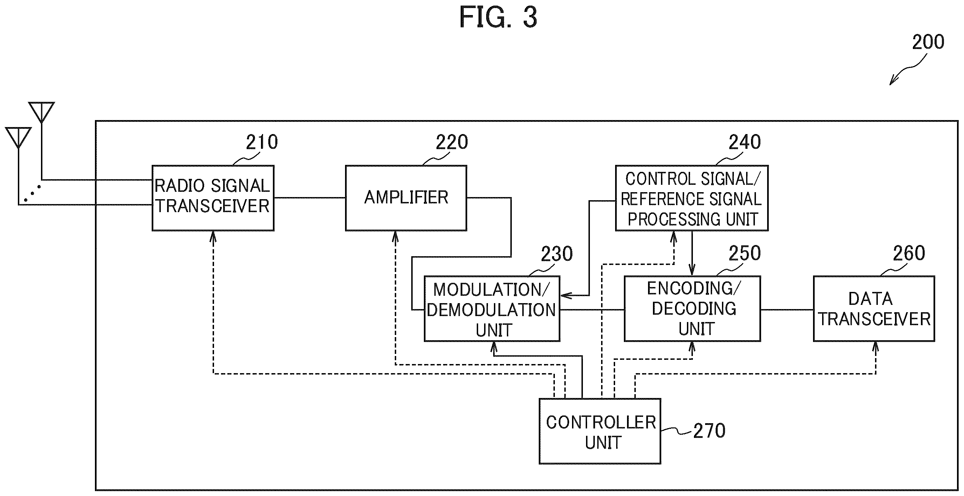

Fig. 3 is the functional block configuration diagram of the UE 200. As illustrated in Fig. 3, the UE 200 includes a radio signal transceiver 210, an amplifier 220, a modulation/demodulation unit 230, a control signal/reference signal processing unit 240, an encoding/decoding unit 250, a data transceiver 260, and a control unit 270.

The radio signal transceiver 210 transmits and receives a radio signal according to NR. The radio signal transceiver 210 supports Massive MIMO, CA using a plurality of CCs in a bundle, DC simultaneously performing communication between the UE and each of the two NG-RAN nodes, and the like.

Specifically, the radio signal transceiver 210 transmits and receives a radio signal via various physical channels. In particular, the radio signal transceiver 210 constitutes a receiving unit that receives a physical downlink control channel in the present embodiment. The physical downlink control channel may be specifically interpreted as a PDCCH (Physical Downlink Control Channel).

In addition, the radio signal transceiver 210 also constitutes a transmitting unit that transmits capability information of the UE 200 regarding reception of the physical downlink control channel to the network.

The capability information of the UE 200 may be interpreted as UE capability information defined in 3GPP TS38.331 or the like.

The radio signal transceiver 210 can transmit the UE capability information via a predetermined uplink physical channel. Note that the content of the UE capability information regarding the reception of the PDCCH will be further described later.

The amplifier 220 is configured using a PA (Power Amplifier)/LNA (Low Noise Amplifier) or the like. The amplifier 220 amplifies a signal output from the modulation/demodulation unit 230 to a predetermined power level. In addition, the amplifier 220 amplifies an RF signal output from the radio signal transceiver 210.

The modulation/demodulation unit 230 executes data modulation/demodulation, transmission power setting, resource block assignment, and the like for each predetermined communication destination (the gNB 100A or the like). In the modulation/demodulation unit 230, Cyclic Prefix-Orthogonal Frequency Division Multiplexing (CP-OFDM)/Discrete Fourier Transform-Spread (DFT-S-OFDM) may be applied. In addition, DFT-S-OFDM may be used for a downlink (DL) as well as an uplink (UL).

The control signal/reference signal processing unit 240 executes processing regarding various control signals transmitted and received by the UE 200 and processing regarding various reference signals transmitted and received by the UE 200.

Specifically, the control signal/reference signal processing unit 240 receives various control signals transmitted from the gNB 100A (or the gNB 100B, hereinafter the same) via a predetermined control channel, for example, a control signal of a radio resource control layer (RRC). In addition, the control signal/reference signal processing unit 240 transmits various control signals to the gNB 100A via the predetermined control channel.

The control signal/reference signal processing unit 240 executes processing using the reference signal (RS) such as a Demodulation Reference Signal (DMRS) and a Phase Tracking Reference Signal (PTRS).

DMRS is a known reference signal (pilot signal) between a terminal-specific base station and a terminal for estimation of a fading channel used for data demodulation. PTRS is a terminal-specific reference signal that aims at estimation of phase noise which is a problem in high frequency bands.

Note that the reference signal may include a Channel State Information-Reference Signal (CSI-RS), a Sounding Reference Signal (SRS), and aPositioning Reference Signal (PRS) for location information, in addition to DMRS and PTRS.

The channels includes control channels and data channels. The control channels include a PDCCH (Physical Downlink Control Channel), a PUCCH (Physical Uplink Control Channel), a RACH (Random Access Channel), Downlink Control Information (DCI) including a Random Access Radio Network Temporary Identifier (RA-RNTI), a Physical Broadcast Channel (PBCH), and the like.

The data channels include a PDSCH (Physical Downlink Shared Channel), a PUSCH (Physical Uplink Shared Channel), and the like. The data may mean data transmitted via a data channel.

In addition, the physical channel may include at least PDCCH, PUCCH, PUSCH, and PDSCH.

The encoding/decoding unit 250 executes data division/concatenation, channel coding/decoding, and the like for each predetermined communication destination (the gNB 100A or the like).

Specifically, the encoding/decoding unit 250 divides data output from the data transceiver 260 into a predetermined size, and executes channel coding on the divided data. In addition, the encoding/decoding unit 250 decodes the data output from the modulation/demodulation unit 230 and concatenates the decoded data.

The data transceiver 260 executes transmission and reception of Protocol Data Unit (PDU) and Service Data Unit (SDU). Specifically, the data transceiver 260 executes assembling/disassembling of PDU/SDU in a plurality of layers (a medium access control layer (MAC), a radio link control layer (RLC), a packet data convergence protocol layer (PDCP), and the like). In addition, the data transceiver 260 executes data error correction and retransmission control based on hybrid ARQ (Hybrid automatic repeat request).

The control unit 270 controls the respective functional blocks constituting the UE 200. In particular, the control unit 270 supports the coverage enhancement (CE), and thus, can execute various types of control for the physical channel.

Specifically, the control unit 270 may assume that a size of control information transmitted via the PDCCH is small in a state (which may be called a second state) of being different from a normal state (which may be called a first state) and supporting the coverage enhancement.

More specifically, in the second state, the control unit 270 may assume that a size of control information transmitted via PDCCH is smaller than a size of control information transmitted via the PDCCH in the first state.

Note that the first state may be interpreted as a state where the coverage enhancement is not performed, that is, a non-coverage enhancement state, and the second state may be interpreted as a state where the coverage enhancement is performed. Alternatively, in a broad sense, the second state may be interpreted as a state where at least any configuration related to the physical channel is different from that in the first state.

In addition, the control unit 270 may assume a downlink control information format having a small size in the second state. Specifically, the control unit 270 may assume that a size of the information amount (which may be read as a resource) specified by a format of downlink control information (DCI) applied to the first state (for example, DCI 0_0, DCI 0_1, DCI 0_2, DCI 0_1, DCI 1_1, DCI 1_2, and the like) is smaller than a size of the information amount specified by a DCI format applied to the second state (for example, DCI 0_x, DCI 1_x, x may be a tentative name).

In addition, the control unit 270 may assume that at least any of resources in the frequency direction and the time direction of the PDCCH increases in the second state when being expressed in other words from the viewpoint of the resource.

That is, the control unit 270 may assume that at least any of the resources in the frequency direction and the time direction of PDCCH transmitted from the network in the second state increases as compared to PDCCH transmitted from the network in the first state.

(3) Operation of radio communication system

Next, the operation of the radio communication system 10 will be described. Specifically, operations regarding the reception of the physical downlink control channel (PDCCH) supporting the coverage enhancement (CE) performed by the UE 200 will be described.

(3.1) Premise

The Study Item configured by 3GPP (see RP-193240) assumes implementation of coverage enhancement in both FR1 and FR2 frequency bands.

Target scenarios include provision of a service from an outdoor (O) gNB to an indoor (I) UE (in the case of FR1) and provision of a service from an indoor gNB to an indoor UE (in the case of FR2). In addition, the coverage enhancement in urban areas, suburbs, and rural areas (outlands) (including rural areas for long-distance communication) is set as a target.

In addition, the main target services are VoIP (Voice over IP) and eMBB (enhanced Mobile Broadband).

As a result of evaluating the maximum attenuation amount (MCL: Maximum Coupling Loss) of physical channels, specifically, PDSCH, PUSCH, PDCCH, and PUCCH based on such scenarios and target services, it is assumed that there is a need for improvement as illustrated below.

(FR1)

- PUSCH: Approx. 10 dB (VoIP), Approx. 15 dB (eMBB)

- PDCCH: Approx. 5 dB (VoIP)

(FR2)

- PUSCH: approx. 5 dB (eMBB)
- PDCCH: Approx. 10 dB (VoIP)
- PUCCH: Approx. 5 dB (VoIP)

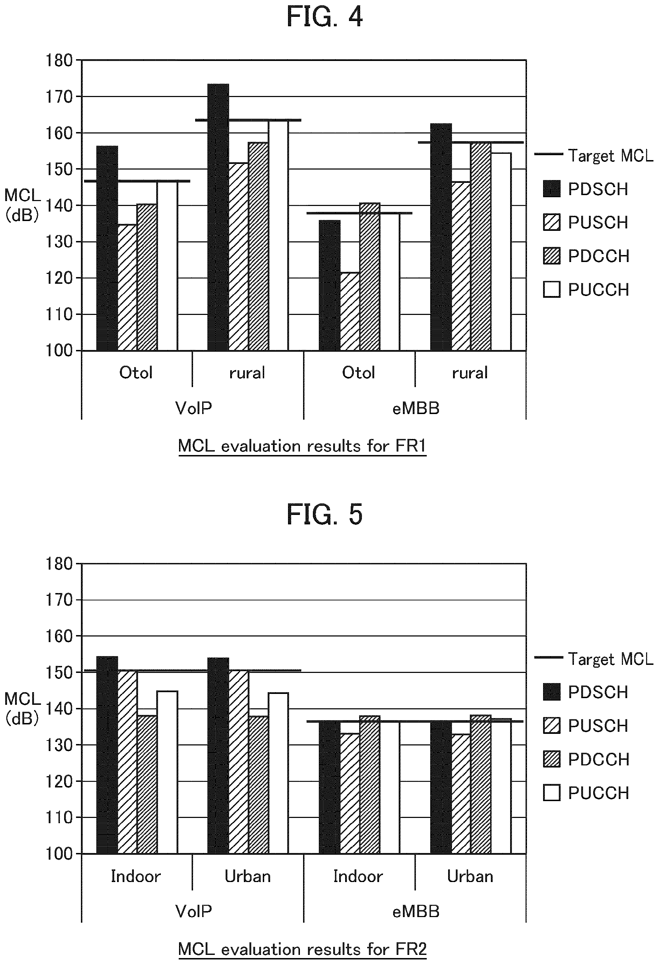

Fig. 4 illustrates the MCL evaluation result of the physical channel in FR1. Fig. 5 illustrates the MCL evaluation result of the physical channel in FR2.

Hereinafter, operations related to improvement of PDCCH to support the coverage enhancement will be described.

Assuming the use of VoIP in FR1 and FR2, the assignment of a few frequency/time resources to a payload (PRB: Physical Resource Block) is considered as a cause that lowers the MCL of PDCCH as compared to other channels as illustrated below.

- PUSCH: 24 bits/(3 PRBs × 2 symbols)
- Shared channel (SCH): 7-8 bits/(1 PRBs × 14 symbols)
- PUCCH: 1 bit/(1 PRBs × 2 symbols)

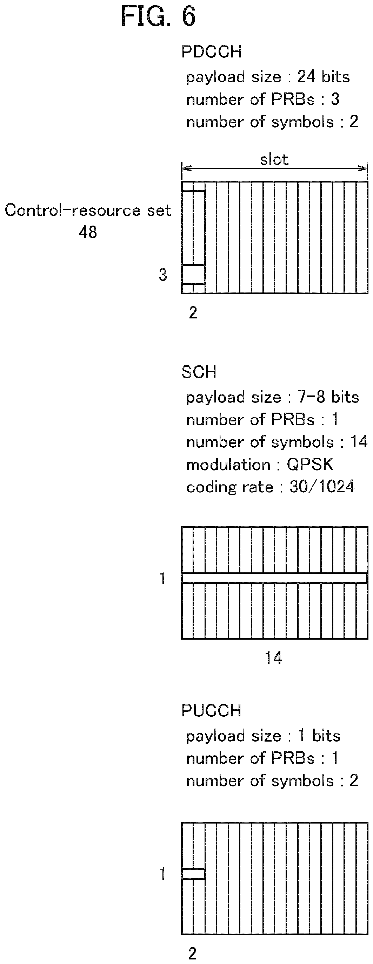

Fig. 6 illustrates an assignment example of frequency/time resources for each of PDCCH, SCH, and PUCCH described above.

Considering such a situation, the following two methods is considered in order to improve MCL of PDCCH.

(i) Reduction of payload of PDCCH (specifying new DCI format)
(ii) Change of frequency/time resources to which PDCCH is assigned

(3.2) Overview of operations

Hereinafter, operation examples according to the above two methods will be described. In the operation examples, it is possible to enhance the coverage in which the UE 200 can reside (that is, radio communication is normally executed with the gNB 100A (or the gNB 100B)) by improving MCL of PDCCH.

Specifically, Operation Examples 1 to 3 will be described. Outlines of Operation Examples 1 to 3 are as follows.

(Operation Example 1): Reduction of payload of PDCCH (specifying new DCI format)

A DCI format (DCI 0_x, 1_x) for coverage enhancement is specified in order to reduce a payload size of PDCCH. In addition, fields and the like that constitute DCI may be set as follows.

- Frequency domain resource assignment: set the number of RBs (LRBs) to a unique value
- Time domain resource assignment: limit an index of Default table
- Modulation and coding scheme (MCS): limit a setting value
- TPC command: set 0 bit (recognized as up/stay by the UE 200)
- Others: Values such as initial values may be configured by an RRC layer for an item that is not included in the DCI format and an item for which notification in the DCI format is disable.

(Operation Example 2): Expansion of frequency/time resources to which PDCCH is assigned

The number of OFDM symbols to which PDCCH is assigned is expanded from existing {1, 2, and 3} (for example, 1, 2, 3, 4, 6, and 12). Specifically, the expansion may be performed by the following methods.

- Method 1: Add (for example: 4, 6, and 12) to the notification of the number of OFDM symbols ($N_{symb}^{CORESET}$)
- Method 2: $N_{symb}^{CORESET}$ is set to {1, 2, 3} as in 3GPP Release-15 and the like, and OFDM symbols are subjected to Aggregation (aggregated) in the time direction.
- Method 3: $N_{symb}^{CORESET}$ is set to {1, 2, 3} as in 3GPP Release-15 and the like, and OFDM symbols are subjected to Repetition (repeated) in the time direction.

(Operation Example 3): Report of UE capability

The UE 200 reports the following capabilities of the UE 200 for PDCCH, for example.

- Availability for new DCI format (DCI 0_x, 1_x)
- Availability for expansion of number of OFDM symbols to which PDCCH is assigned
- Availability for Aggregation in time direction of

PDCCH

(3.3) Operation Example 1

In the present operation example, a payload of PDCCH, that is, the amount of control information transmitted via PDCCH is reduced.

(3.3.1) Operation Example 1-1

As described above, a DCI format (DCI 0_x, 1_x) for coverage enhancement may be specified in order to reduce a payload size of PDCCH.

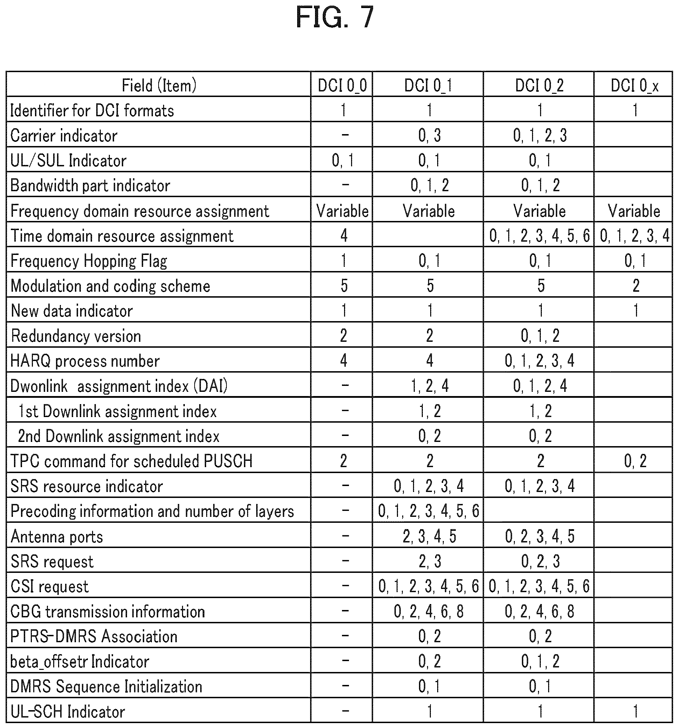

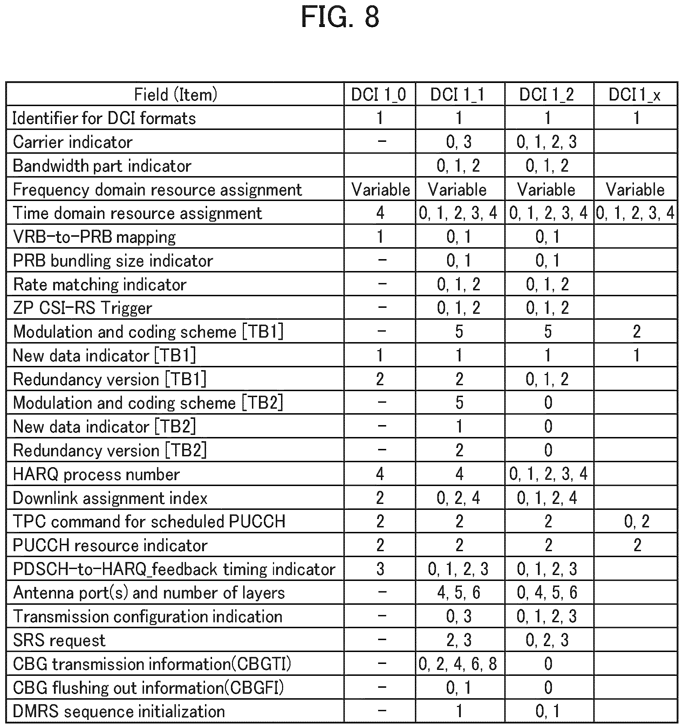

Fig. 7 illustrates an example of a DCI format for PUSCH scheduling (including DCI 0_x supporting coverage enhancement). Fig. 8 illustrates an example of a DCI format for PDSCH scheduling (including DCI 1_x supporting coverage enhancement). The numbers in the table represent the number of bits.

As illustrated in Figs. 7 and 8, in the DCI format (DCI 0_x, 1_x) for the coverage enhancement, the resource assignment in the time direction (time domain resource assignment) is reduced as compared to DCI 0_2, 1_2 (for URLLC (Ultra-Reliable and Low Latency Communications)) and the like. In addition, the TPC command may be recognized as up or stay as the number of MCSs is reduced.

In addition, assuming VoIP (about 10 kbps) by the UE 200 located at a cell edge, SCH may be set as follows.

- Number of PRBs: about 1 to 4
- MCS (MCS index): about 0 to 3
- Number of Multiple-Input Multiple-Output (MIMO) layers: 1

Based on the above settings, the content of the field defined as DCI 0_x, 1_x may be notified by the DCI format.

(3.3.2) Operation Example 1-2

In the resource assignment to PDCCH in the frequency direction (frequency domain) (frequency domain resource assignment), a resource assignment type 1 may be assumed.

Here, the number of RBs (LRBs) may be a unique value (fixed value) (for example, LRBs = 1). The number of RBs (LRBs) may be configured using an information element (IE) of an RRC layer, for example, PDSCH-Config IE or PUSCH-Config IE. In addition, LRBs = 1 may be given as the initial value, for example.

Therefore, the value configured by DCI may be only an RB start position (RB start). In addition, similarly to the DCI formats 0_2 and 1_2, the granularity (granularity (K2)) of RBstart may be configured (RBGstart). As a result, the required number of bits can be further reduced.

In this case, the required number of bits can be expressed as follows.

[Expression 1]

$$\left\lceil \log_2 \left( \left\lceil N_{RB}^{DL/UL,BWP} / K2 \right\rceil \right) \right\rceil$$

In addition, in the resource assignment to PDCCH in the time direction (time domain) (time domain resource assignment), an index of a default table may be limited.

For example, a combination of an index of a default table (Default PUSCH time domain resource assignment A for normal CP) specified in Table 6.1.2.1.1-2 of 3GPP TS38.214 and an index configured by DCI may be specified.

In this case, for example, DCI indices (0, 1, 2, and 3) may be combined with indices (0, 1, 4, and 7) of the default table. Alternatively, a new table in which the number of indices of the default table is reduced may be defined.

(3.3.3) Operation Example 1-3

As described above, the setting value of MCS may be limited more as compared to the case of non-coverage enhancement. For example, MCS (MCS index) may be limited to only values of 0 to 3 (that is, 2 bits).

Specifically, MCS may be configured using only values 0 to 3 of Table 5.1.3.1-1 (MCS table applied to non-coverage enhancement for PDCCH) in 3GPP TS 38.214.

Alternatively, a combination of an index set by DCI and an index of the MCS table may be specified. For example, DCI indices (0, 1, 2, and 3) may be combined with indices (0, 2, 4, and 6) of the MCS table.

Alternatively, a new table in which the number of indices of the MCS table is reduced may be defined.

In addition, the TPC command may be 0 bit as described above. Specifically, valid/invalid (Enable/Disable) of the TPC command (see Figs. 7 and 8) in DCI may be configured by signaling of an RRC layer.

When configured as Disable, resources of PUSCH and/or PUCCH set by DCI formats 0_x and 1_x may be recognized as an up command (or a stay command) by the UE 200. That is, the UE 200 does not necessarily assume a down command when the TPC command is configured as 0 bit. Note that the down command may be notifiable only by the DCI format 2_2.

In addition, values such as initial values may be configured by the RRC layer, instead of DCI, for the item that is not included in the DCI format and the item for which notification in the DCI format is disable as described above. Examples of such items include a frequency hopping flag and the like.

(3.4) Operation Example 2

In the present operation example, frequency/time resources to which PDCCH is assigned are expanded. Specifically, in the case of supporting the coverage enhancement, the number of OFDM symbols of PDCCH may be expanded from the existing {1, 2, and 3} (for example, 1, 2, 3, 4, 6, and 12).

(3.4.1) Operation Example 2-1

As described above, (for example: 4, 6, and 12) may be added to the notification of the number of OFDM symbols ($N\_symb^{CORESET}$) in Method 1.

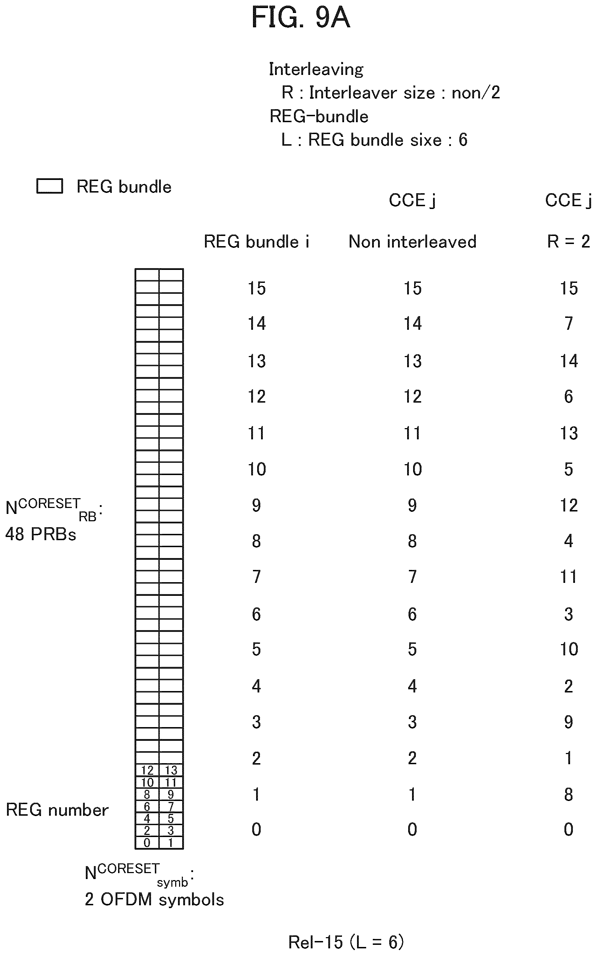

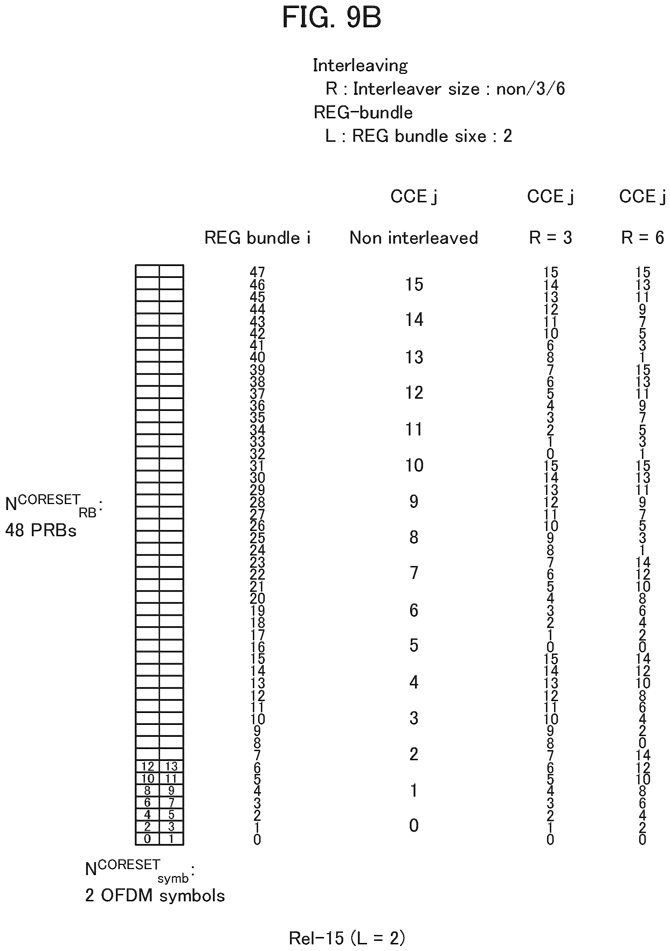

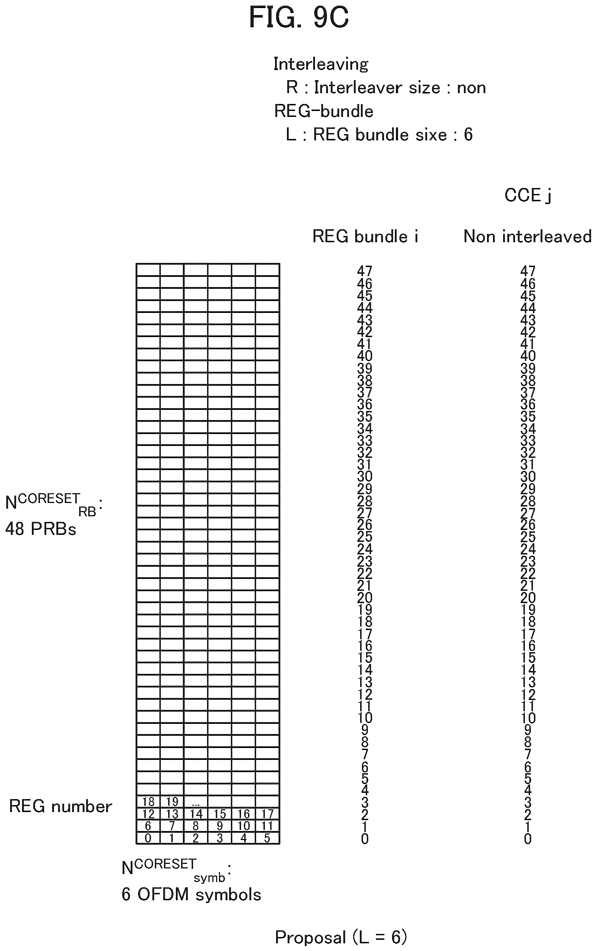

Figs. 9A, 9B, and 9C illustrate configuration examples (Parts 1 to 3) of the number of OFDM symbols for PDCCH ($N\_symb^{CORESET}$) according to an REG bundle size, an REG bundle, and CCE.

Specifically, Fig. 9A illustrates the configuration example when REG bundle size L = 6 according to 3GPP Release-15. Fig. 9B illustrates the configuration example when REG bundle size L = 2 according to 3GPP Release-15. Figs. 9A and 9B illustrate examples when $N\_symb^{CORESET}$ = 2 and $N\_RB^{CORESET}$ = 48.

On the other hand, Fig. 9C illustrates the configuration example when REG bundle size L = 6 according to Operation Example 2-1. Fig. 9C illustrates an example when $N\_symb^{CORESET}$ = 6 and $N\_RB^{CORESET}$ = 48.

Note that RE, REG, the REG bundle, and CCE may be expressed as follows.

- Resource element (RE): a minimum unit of a resource grid constituted by one subcarrier in the frequency domain or one OOFDM symbol in the time domain
- Resource element group (REG): constituted by one resource block (12 resource elements in the frequency domain) and one OFDM symbol in the time domain
- REG bundle: constituted by a plurality of REGs. The bundle size can be designated by a parameter 'L', and L can be decided by a radio resource control layer (RRC) parameter (reg-bundle-size).
- Control channel element (CCE): constituted by a plurality of REGs. The number of REG bundles included in CCE may be variable.

A candidate for the REG bundle size L may depend on the number of OFDM symbols as in 3GPP Release-15. Alternatively, it may be always L = 6 or the like (that is, fixed to a predetermined value).

For example, L = 4 when the number of OFDM symbols = 4, and L = 6 when the number of OFDM symbols = 6. In addition, L = {6, 12} (6 or 12) when the number of OFDM symbols = 12.

Note that the number of REGs of CCE may be the same as the value of L or may be a multiple of L when L = 4 or 12.

An information element (IE) of the RRC layer may be used for the content of PDCCH-related configuration applied in the case of supporting the coverage enhancement similarly to 3GPP Release-15 and the like. For example, IE of ControlResourceSet may be used.

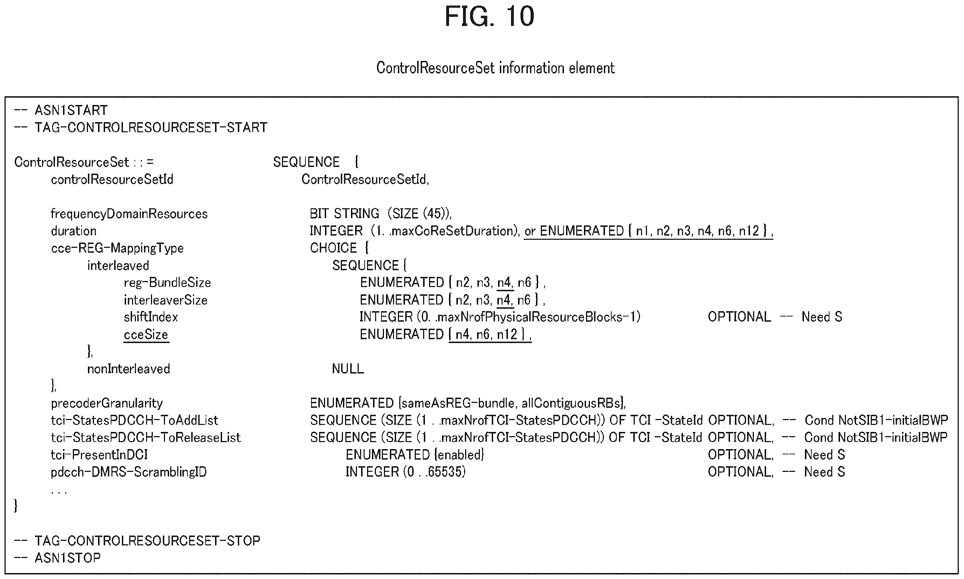

Fig. 10 illustrates a configuration example of ControlResourceSet according to Operation Example 2-1. As illustrated in Fig. 10, duration may be configured as INTEGER (1..maxCoReSetDuration) or ENUMERATED {n1, n2, n3, n4, n6, n12}.

The duration is a duration in which control resource sets (CORESETs) expressed in the number of symbols (OFDM symbols) are continuous (see Chapter 7.3.2.2 of 3GPP TS 38.211). In the present operation example, max-CoReSetDuration (the maximum number of OFDM symbols in CORESET) can be set to 6 or 12.

In addition, as illustrated in Fig. 10, n4 may be added to reg-BundleSize and interleaverSize, and cceSize (ENUMERATED (n4, n6, n12)) notifying the REG number of CCE may be added.

(3.4.2) Operation Example 2-2

As described above, in Method 2, $N\_symb^{CORESET}$ is set to {1, 2, 3} as in 3GPP Release-15 and the like, and OFDM symbols are subjected to Aggregation (aggregated) in the time direction.

CCE may be configured by the same method as that in 3GPP Release-15 and the like. The network (NG-RAN 20) notifies the UE 200 of the number of aggregations (# of aggregations, for example, 1, 2, or 3).

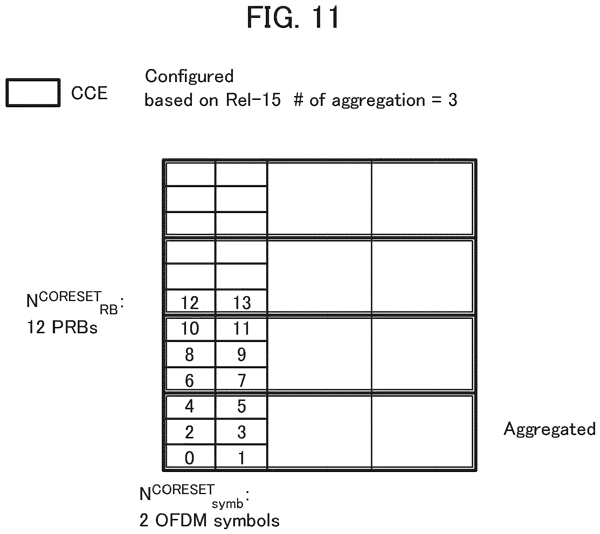

Fig. 11 illustrates a configuration example of the number of OFDM symbols for PDCCH ($N\_symb^{CORESET}$), CCE, and the aggregation according to Operation Example 2-2.

Fig. 11 illustrates an example in which the number of aggregations = 3, $N\_symb^{CORESET}$ = 2, and the number of RBs (PRBs) of CORESET ($N\_RB^{CORESET}$) = 12.

As illustrated in Fig. 11, $N\_symb^{CORESET}$ = 2 and the number of aggregations = 3, and thus, the OFDM symbols are expanded up to 6 symbols in the time direction (see the bold-line frame in the drawing).

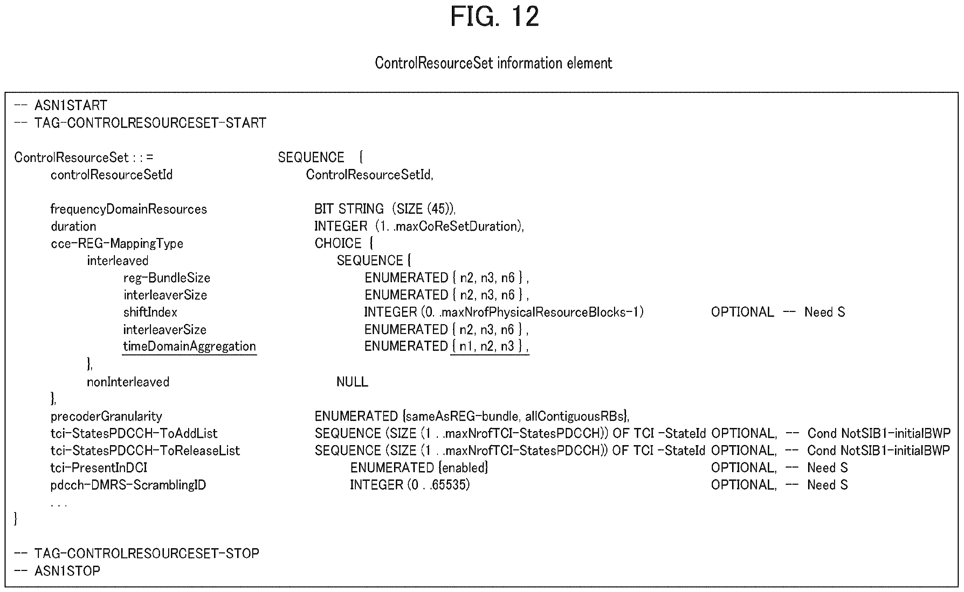

Fig. 12 illustrates a configuration example of ControlResourceSet according to Operation Example 2-2. As illustrated in Fig. 12, the number of aggregations (ENUMERATED (n1, n2, n3)) may be notified using the field of time-DoaminAggregation.

(3.4.3) Operation Example 2-3

As described above, in Method 3, $N\_symb^{CORESET}$ is set to {1, 2, 3} as in 3GPP Release-15 and the like, and the OFDM symbol is subjected to Repetition (repeated) in the time direction.

CCE may be configured by the same method as that in 3GPP Release-15 and the like. The network (NG-RAN 20) notifies the UE 200 of the number of repetitions (# of repetitions, for example, 1, 2, or 3).

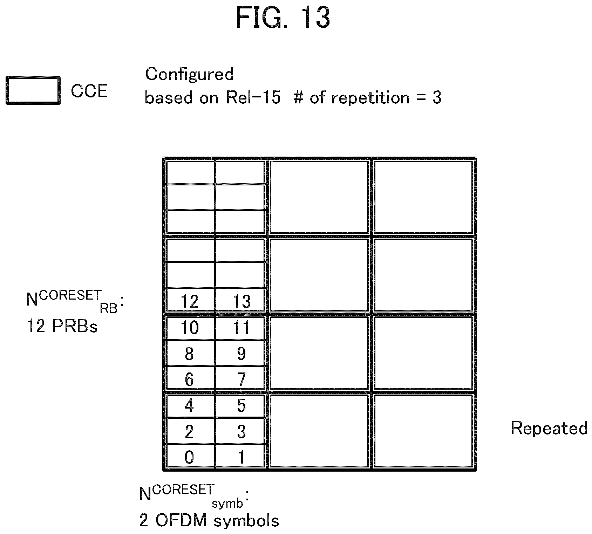

Fig. 13 illustrates a configuration example of the number of OFDM symbols for PDCCH ($N\_symb^{CORESET}$), CCE, and the repetition according to Operation Example 2-3.

Fig. 13 illustrates an example in which the number of repetitions = 3, $N\_symb^{CORESET}$ = 2, and the number of RBs (PRBs) of CORESET ($N\_RB^{CORESET}$) = 12.

As illustrated in Fig. 13, $N\_symb^{CORESET}$ = 2 and the number of repetitions = 3, and thus, the OFDM symbols are repeated three times in the time direction (see the bold-line frame in the drawing). Note that the repetition of OFDM symbols is continuous in the time direction in Fig. 13, but the OFDM symbols to be subjected to Repetition (repeated) is not necessarily continuous in the time direction, and may be arranged to be dispersed in the time direction.

In addition, for example, ControlResourceSet may be used as in Operation Example 2-2 for the notification of the number of repetitions.

(3.5) Operation Example 3

In the present operation example, the UE 200 may transmit capability information (UE capability information) of the UE 200 regarding reception of PDCCH to the network.

As described above, the UE 200 can report the following capabilities of the UE 200 for PDCCH, for example.

- Availability for new DCI format (DCI 0_x, 1_x)
- Availability for expansion of number of OFDM symbols to which PDCCH is assigned
- Availability for Aggregation (including Repetition) in time direction of PDCCH

Specifically, for a frequency band (which may be FR or Band) supported by the UE 200, the report of the UE capability (may be paraphrased as transmission of UE capability information) may be performed in any of the following ways.

- Report whether all frequencies can be collectively supported (availability as the UE 200)

- Report availability for each frequency
- Report availability for each frequency range (for example, FR1 and FR2)

In addition, a duplex system supported by the UE 200 may be reported in any of the following ways.

- Report availability as UE 200
- Report for each duplex system (Time Division Duplex (TDD) and Frequency Division Duplex (FDD))

(4) Operation/effect

Next, operati7ons and effects achieved by the radio communication system 10 that supports the above-described operations according to the coverage enhancement will be described.

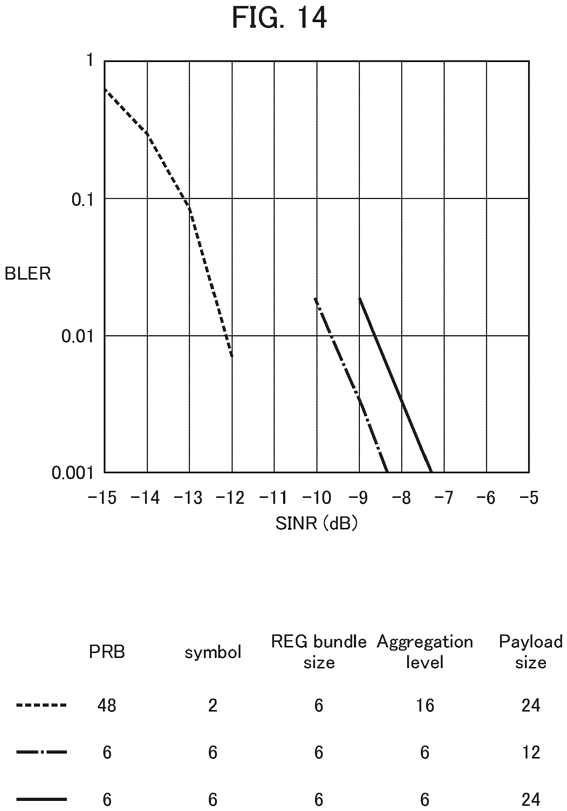

Fig. 14 illustrates BLER characteristics when the number of OFDM symbols to which PDCCH is assigned and a payload size of PDCCH are changed.

As illustrated in Fig. 14, when the number of OFDM symbols = 6, a difference of about 3.5 dB is generated in a block error rate (BLER), for example, a required Signal-to-Interference plus Noise power Ratio (SINR) that is required to achieve 10.

Meanwhile, if the number of PRBs is reduced from 48 to 6 (1/8), a gain will be approximately 9 dB at the time of computing MCL (see Chapter 5.1.2 of 3GPP TS36.824). Therefore, as a result, MCL of PDCCH can be improved by about 5.5 dB by introducing the number of OFDM symbols = 6.

In addition, the improvement of about 1 dB can be also expected by reducing a payload size of PDCCH from 24 bits to 12 bits.

In this manner, the UE 200 can assume that the size of control information transmitted via the PDCCH is small in the state (which may be called the second state) of being different from the normal state (which may be called the first state) and supporting the coverage enhancement, according to the embodiment described above.

In addition, the UE 200 may assume that at least any of resources in the frequency direction and the time direction of the PDCCH increases in the state of supporting the coverage enhancement.

Since the UE 200 assumes the above configuration of PDCCH suitable for the coverage enhancement, the UE 200 can normally receive PDCCH supporting the coverage enhancement at the time of enhancing the coverage.

In the present embodiment, the UE 200 may assume a DCI format (DCI 0_x or DCI 1_x) having a smaller size than the non-coverage enhancement state in the state of supporting the coverage enhancement, that is, when the radio communication system 10 supports the coverage enhancement. Therefore, the UE 200 can enhance the possibility that PDCCH with improved MCL by the DCI format can be normally received.

In the present embodiment, the UE 200 can transmit the capability information of the UE 200 regarding the reception of PDCCH supporting the coverage enhancement to the network. Therefore, the network can transmit an appropriate PDCCH according to the capability of the UE 200.

(5) Other Embodiments

Although the embodiment has been described as above, it is obvious to those skilled in the art that the invention is not limited to the description of the embodiment and various modifications and improvements can be made.

For example, the above-described embodiment has been described on the premise that the configuration related to PDCCH is changed at the time of enhancing the coverage, but the invention is not limited to the time of enhancing the coverage as described above. For example, the second state may be interpreted as a state where at least any configuration related to the physical channel including PDCCH is different from the first state, and may be interpreted as a case where a predetermined DCI format is used.

In addition, the block configuration diagram used for the description of the above embodiment (Fig. 3) illustrates the blocks in units of functions. Those functional blocks (components) can be implemented by a desired combination of at least one of hardware and software. In addition, a method for implementing each functional block is not particularly limited. That is, each functional block may be implemented by one physically or logically coupled device, or may be implemented by directly or indirectly connecting two or more physically or logically separated devices (for example, in a wired or wireless manner), and these plural devices. The functional blocks may be implemented by combining software with the one device or the plural devices described above.

Functions include determining, deciding, judging, calculating, computing, processing, deriving, investigating, searching, ascertaining, receiving, transmitting, output, accessing, resolving, selecting, choosing, establishing, comparing, assuming, expecting, considering, broadcasting, notifying, communicating, forwarding, configuring, reconfiguring, allocating (mapping), assigning, and the like. However, the functions are not limited thereto. For example, a functional block (component) that causes transmitting to function is called a transmitting unit or a transmitter. An implementation method for any of the above functions is not particularly limited to any one method as described above.

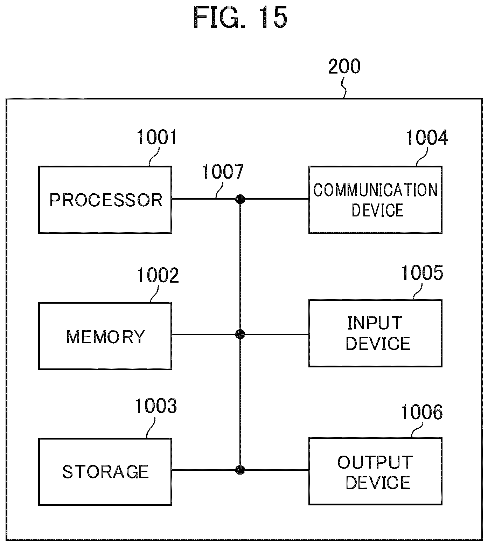

Furthermore, the UE 200 described above can function as a computer that performs the processing of the radio communication method of the present disclosure. Fig. 15 is a diagram illustrating an example of a hardware configuration of the UE 200. As illustrated in Fig. 15, the UE 200 can be configured as a computer device including a processor 1001, a memory 1002, a storage 1003, a communication device 1004, an input device 1005, an output device 1006, a bus 1007, and the like.

Note that the term "device" can be replaced with a circuit, device, unit, and the like in the following explanation. The hardware configuration of the device can be configured to include one or a plurality of the devices illustrated in the drawings, or can be configured by without including some of the devices.

The functional blocks of the UE 200 (see Fig. 3) can be implemented by any of hardware elements of the computer device or a desired combination of the hardware elements.

Moreover, various functions of the UE 200 are realized by loading a predetermined software (program) on hardware such as the processor 1001 and the memory 1002 to perform operations by the processor 1001, and by controlling communication via the communication device 1004, and controlling reading and/or writing of data on the memory 1002 and the storage 1003.

The processor 1001, for example, operates an operating system to control the entire computer. The processor 1001 can be configured with a central processing unit (CPU) including an interface with a peripheral device, a control device, a computing device, a register, and the like.

In addition, the processor 1001 reads a program (program code), a software module, data, and the like from the storage 1003 and/or the communication device 1004 into the memory 1002, and executes various processes according to the data. As the program, a program that is capable of executing on the computer at least a part of the operation described in the above embodiment is used. Alternatively, various processes described above can be executed by one processor 1001 or can be executed simultaneously or sequentially by two or more processors 1001. The processor 1001 can be implemented using one or more chips. Note that the program can be transmitted from a network via a telecommunication line.

The memory 1002 is a computer-readable recording medium and is configured, for example, using at least one of a read only memory (ROM), an erasable programmable ROM (EPROM), an electrically erasable programmable ROM (EEPROM), a random access memory (RAM), and the like. The memory 1002 can be called a register, a cache, a main memory (main storage device), and the like. The memory 1002 can store therein a program (program codes), software modules, and the like that can execute the method according to the embodiment of the present disclosure.

The storage 1003 is a computer readable recording medium. Examples of the storage 1003 include an optical disk such as a compact disc ROM (CD-ROM), a hard disk drive, a flexible disk, a magneto-optical disk (for example, a compact disk, a digital versatile disk, Blu-ray (registered trademark) disk), a smart card, a flash memory (for example, a card, a stick, a key drive), a floppy (registered trademark) disk, a magnetic strip, and the like. The storage 1003 may be called an auxiliary storage device. The recording medium can be, for example, a database including the memory 1002 and/or the storage 1003, a server, or other appropriate medium.

The communication device 1004 is hardware (transmission/reception device) capable of performing communication between computers via at least one of a wired network and a wireless network. The communication device 1004 is also called, for example, a network device, a network controller, a network card, a communication module, and the like.

The communication device 1004 includes a high-frequency switch, a duplexer, a filter, a frequency synthesizer, and the like in order to implement, for example, at least one of Frequency Division Duplex (FDD) and Time Division Duplex (TDD).

The input device 1005 is an input device (for example, a keyboard, a mouse, a microphone, a switch, a button, a sensor, and the like) that receives input from the outside. The output device 1006 is an output device (for example, a display, a speaker, an LED lamp, and the like) that outputs data to the outside. Note that the input device 1005 and the output device 1006 may be integrated (for example, a touch screen).

In addition, the respective devices, such as the processor 1001 and the memory 1002, are connected to each other with the bus 1007 for communicating information thereamong. The bus 1007 can be configured using a single bus or can be configured using separate buses between the devices.

In addition, the device may be configured to include hardware such as a microprocessor, a digital signal processor (DSP), an application specific integrated circuit (ASIC), a programmable logic device (PLD), and a field programmable gate array (FPGA). Some or all of the functional blocks may be implemented by the hardware. For example, the processor 1001 may be implemented by using at least one of these kinds of hardware.

In addition, notification of information is not limited to that described in the above aspect/embodiment, and may be performed using a different method. For example, the notification of information may be performed by physical layer signaling (for example, downlink control information (DCI), uplink control information (UCI), upper layer signaling (for example, RRC signaling, medium access control (MAC) signaling, notification information (master information block (MIB), system information block (SIB)), other signals, or a combination of these. In addition, the RRC signaling may be called an RRC message, for example, or can be an RRC connection setup message, an RRC connection reconfiguration message, or the like.

Each of the aspects/embodiments described in the present disclosure can be applied to at least one of Long Term Evolution (LTE), LTE-Advanced (LTE-A), SUPER 3G, IMT-Advanced, 4th generation mobile communication system (4G), 5th generation mobile communication system (5G), Future Radio Access (FRA), New Radio (NR), W-CDMA (registered trademark), GSM (registered trademark), CDMA2000, Ultra Mobile Broadband (UMB), IEEE 802.11 (Wi-Fi (registered trademark)), IEEE 802.16 (WiMAX (registered trademark)), IEEE 802.20, Ultra-WideBand (UWB), Bluetooth (registered trademark), a system using any other appropriate system, and a next-generation system that is expanded based on these. In addition, a plurality of systems may be combined (for example, a combination of at least one of the LTE and the LTE-A with the 5G).

As long as there is no inconsistency, the order of processing procedures, sequences, flowcharts, and the like of each of the aspects/embodiments described in the present disclosure may be exchanged. For example, the various steps and the sequence of the steps of the methods described above are exemplary and are not limited to the specific order described above.

The specific operation that is performed by the base station in the present disclosure may be performed by its upper node in some cases. In a network constituted by one or more network nodes having a base station, the various operations performed for communication with the terminal may be performed by at least one of the base station and other network nodes other than the base station (for example, MME, S-GW, and the like may be considered, but not limited thereto). In the above description, the example in which there is one network node other than the base station has been described; however, a combination of a plurality of other network nodes (for example, MME and S-GW) may be used.

Information and signals (information and the like) can be output from an upper layer (or lower layer) to a lower layer (or upper layer). The information may be input and output via a plurality of network nodes.

The input/output information can be stored in a specific location (for example, a memory) or can be managed in a management table. The information to be input/output can be overwritten, updated, or added. The information can be deleted after outputting. The input information can be transmitted to another device.

The determination may be made using a value (0 or 1) represented by one bit, using Boolean value (Boolean: true or false), or by comparison of numerical values (for example, comparison with a predetermined value).

Each aspect/embodiment described in the present disclosure may be used separately or in combination, or may be switched in accordance with the execution. In addition, notification of predetermined information (for example, notification of "being X") is not limited to being performed explicitly, but may be performed implicitly (for example, without notifying the predetermined information).

Regardless of being called software, firmware, middleware, a microcode, a hardware description language, or some other name, the software should be interpreted broadly to mean an instruction, an instruction set, a code, a code segment, a program code, a program, a subprogram, a software module, an application, a software application, a software package, a routine, a subroutine, an object, an executable file, an execution thread, a procedure, a function, and the like.

In addition, software, an instruction, information, and the like may be transmitted and received via a transmission medium. For example, when software is transmitted from a website, a server, or some other remote source using at least one of a wired technology (coaxial cable, optical fiber cable, twisted pair, digital subscriber line (DSL), or the like) and a wireless technology (infrared light, microwave, or the like), at least one of these wired and wireless technologies is included within the definition of the transmission medium.

The information, signals, or the like described above may be represented by using any of a variety of different technologies. For example, data, an instruction, a command, information, a signal, a bit, a symbol, a chip, or the like that can be described throughout the above description may be represented by a voltage, a current, an electromagnetic wave, a magnetic field or a magnetic particle, an optical field or a photon, or a desired combination thereof.

Note that the terms described in the present disclosure and terms necessary for understanding the present disclosure may be replaced by terms having the same or similar meanings. For example, at least one of a channel and a symbol may be a signal (signaling). In addition, the signal may be a message. In addition, a component carrier (Component Carrier: CC) may be called a carrier frequency, a cell, a frequency carrier, or the like.

The terms "system" and "network" used in the present disclosure can be used interchangeably.

In addition, the information, the parameter, and the like described in the present disclosure can be represented by an absolute value, can be expressed as a relative value from a predetermined value, or can be represented by corresponding other information. For example, the radio resource can be instructed by an index.

The name used for the above parameter is not a restrictive name in any respect. In addition, formulas and the like using these parameters may be different from those explicitly disclosed in the present disclosure. Because the various channels (for example, PUCCH, PDCCH, or the like) and information element can be identified by any suitable name, the various names assigned to these various channels and information elements shall not be restricted in any way.

In the present disclosure, it is assumed that "base station (Base Station: BS)", "radio base station", "fixed station", "NodeB", "eNodeB (eNB)", "gNodeB (gNB)", "access point", "transmission point", "reception point", "transmission/reception point", "cell", "sector", "cell group", "carrier", "component carrier", and the like can be used interchangeably. The base station may also be referred to with the terms such as a macro cell, a small cell, a femtocell, or a pico cell.

The base station can accommodate one or more (for example, three) cells (also called sectors). In a configuration in which the base station accommodates a plurality of cells, the entire coverage area of the base station can be divided into a plurality of smaller areas. In each such a smaller area, communication service can be provided by a base station subsystem (for example, a small base station for indoor use (Remote Radio Head: RRH)).

The term "cell" or "sector" refers to a part or all of the coverage area of a base station and/or a base station subsystem that performs communication service in this coverage.

In the present disclosure, the terms "mobile station (Mobile Station: MS)", "user terminal", "user equipment (User Equipment: UE)", "terminal", and the like can be used interchangeably.

The mobile station is called by the persons skilled in the art as a subscriber station, a mobile unit, a subscriber unit, a radio unit, a remote unit, a mobile device, a radio device, a radio communication device, a remote device, a mobile subscriber station, an access terminal, a mobile terminal, a radio terminal, a remote terminal, a handset, a user agent, a mobile client, a client, or with some other suitable term.

At least one of a base station and a mobile station may be called a transmitting device, a receiving device, a communication device, or the like. Note that, at least one of a base station and a mobile station may be a device mounted on a moving body, a moving body itself, or the like. The moving body may be a vehicle (for example, a car, an airplane, or the like), a moving body that moves unmanned (for example, a drone, an automatically driven vehicle, or the like), a robot (manned type or unmanned type). Note that at least one of a base station and a mobile station can be a device that does not necessarily move during the communication operation. For example, at least one of a base station and a mobile station may be an Internet of Things (IoT) device such as a sensor.

In addition, a base station in the present disclosure may be read as a mobile station (user terminal, hereinafter the same). For example, each of the aspects/embodiments of the present disclosure may be applied to a configuration that allows communication between a base station and a mobile station to be replaced with communication among a plurality of mobile stations (for example, may be called Device-to-Device (D2D), Vehicle-to-Everything (V2X), or the like). In this case, the mobile station may have the function of the base station. In addition, the terms "uplink", "downlink" and the like may also be replaced with terms corresponding to inter-terminal communication (for example, "side"). For example, terms such as an uplink channel, and a downlink channel may be read as a side channel.

Likewise, a mobile station in the present disclosure may be read as a base station. In this case, the base station may have the function of the mobile station.

A radio frame may be constituted by one or a plurality of frames in a time domain. The one frame or each frame of the plurality of frames in the time domain may be called a subframe. A subframe may also be constituted by one or a plurality of slots in the time domain. The subframe may have a fixed time length (for example, 1 ms) that does not depend on numerology.

The numerology may be a communication parameter applied to at least one of transmission and reception of a certain signal or channel. The numerology may represent at least one of, for example, a subcarrier spacing (SCS), a bandwidth, a symbol length, a cyclic prefix length, a transmission time interval (TTI), the number of symbols per TTI, a radio frame configuration, a specific filtering process performed by the transceiver in the frequency domain, a specific windowing process performed by the transceiver in the time domain, and the like.

The slot may be constituted by one or a plurality of symbols (such as orthogonal frequency division multiplexing (OFDM)) symbols and single carrier frequency division multiple access (SC-FDMA) symbols) in the time domain. The slot may be a time unit based on the numerology.

The slot may include a plurality of mini-slots. Each mini-slot may be constituted by one or a plurality of symbols in the time domain. In addition, the mini-slot may also be called a sub-slot. The mini-slot may be constituted by fewer symbols than the slot. PDSCH (or PUSCH) transmitted in a time unit greater than the mini-slot may be called PDSCH (or PUSCH) mapping type A. The PDSCH (or PUSCH) transmitted using the mini-slot may be called PDSCH (or PUSCH) mapping type B.

All of the radio frame, the subframe, the slot, the mini-slot, and the symbol represent a time unit at the time of transmitting a signal. All of the radio frame, the subframe, the slot, the mini-slot, and the symbol may have different names corresponding to them.

For example, one subframe may be called a transmission time interval (TTI), a plurality of consecutive subframes may be called TTI, and one slot or one mini-slot may be called TTI. That is, at least one of the subframe and TTI may be a subframe (1 ms) in the existing LTE, may be a period shorter than 1 ms (for example, 1 to 13 symbols), or may be longer than 1 ms. Note that the unit representing TTI may be called a slot, a mini-slot, and the like instead of a subframe.

Here, TTI refers to, for example, a minimum time unit of scheduling in radio communication. For example, in the LTE system, the base station performs scheduling to allocate radio resources (frequency bandwidths, transmission power, and the like that can be used by each user terminal) to each user terminal in units of TTI. Note that the definition of TTI is not limited thereto.

TTI may be a transmission time unit such as a channel-encoded data packet (transport block), a code block, and a codeword, and may be a processing unit such as scheduling and link adaptation. Note that, when TTI is given, a time interval (for example, the number of symbols) at which a transport block, a code block, a codeword, and the like are actually mapped may be shorter than the TTI.

Note that, when one slot or one mini-slot is called TTI, one or more TTIs (that is, one or more slots or one or more mini-slots) may be the minimum time unit for scheduling. In addition, the number of slots (the number of mini-slots) constituting the minimum time unit of the scheduling may be controlled.

TTI having a time length of 1 ms may be called a general TTI (TTI in LTE Rel. 8-12), a normal TTI, a long TTI, a general subframe, a normal subframe, a long subframe, a slot, and the like. The TTI shorter than the general TTI may be called a shortened TTI, a short TTI, a partial TTI (partial or fractional TTI), a shortened subframe, a short subframe, a mini-slot, a sub-slot, a slot, and the like.

Note that a long TTI (for example, a general TTI, a subframe, and the like) may be replaced with TTI having a time length exceeding 1 ms, and a short TTI (for example, a shortened TTI) may be read as a TTI having a TTI length that is shorter than the long TTI and 1 ms or more.

A resource block (RB) is a resource assignment unit in the time domain and the frequency domain, and may include one or a plurality of consecutive subcarriers in the frequency domain. The number of subcarriers included in the RB may be the same regardless of the numerology, and may be twelve, for example. The number of subcarriers included in RB may be decided based on the numerology.

In addition, a time domain of RB may include one or a plurality of symbols, and may be one slot, one mini-slot, one subframe, or one TTI in length. One TTI, one subframe, and the like may be constituted by one or a plurality of resource blocks.

Note that one or a plurality of RBs may be called a physical resource block (Physical RB: PRB), a sub-carrier group (SCG), a resource element group (REG), a PRB pair, an RB pair, and the like.

In addition, the resource block may be constituted by one or a plurality of resource elements (RE). For example, one RE may be a radio resource area of one subcarrier and one symbol.

A bandwidth part (BWP) (may also be called a partial bandwidth) may represent a subset of consecutive common RBs (common resource blocks) for a certain numerology in a certain carrier. Here, the common RB may be specified by an index of RB based on a common reference point of the carrier. The PRB may be defined in a BWP and numbered within the BWP.

The BWP may include a BWP for UL (UL BWP) and a BWP for DL (DL BWP). For UE, one or more BWPs may be configured in one carrier.

At least one of the configured BWPs may be active, and UE does not necessarily assume transmission/reception of a predetermined signal/channel outside the active BWP. Note that "cell", "carrier", and the like in the present disclosure may be read as "BWP".

The structures of the radio frame, the subframe, the slot, the mini-slot, the symbol, and the like described above are merely examples. For example, the configurations such as the number of subframes included in the radio frame, the number of slots per subframe or radio frame, the number of mini-slots included in the slot, the number of symbols and RBs included in the slot or mini-slot, the number of subcarriers included in the RB, the number of symbols in the TTI, the symbol length, and the cyclic prefix (CP) length can be variously changed.

The terms "connected", "coupled", or any variations thereof, mean any direct or indirect connection or coupling between two or more elements. In addition, one or more intermediate elements may be present between two elements that are "connected" or "coupled" to each other. The coupling or connection between the elements may be physical, logical, or a combination thereof. For example, "connection" may be read as "access". In the present disclosure, two elements can be "connected" or "coupled" to each other by using at least one of one or more wires, cables, printed electrical connections, and as some nonlimiting and non-exhaustive examples, by using electromagnetic energy having wavelengths in the radio frequency domain, the microwave region and light (both visible and invisible) regions, and the like.

The reference signal may be abbreviated as Reference Signal (RS) and may be called pilot (Pilot) according to applicable standards.

As used in the present disclosure, the phrase "based on" does not mean "based only on" unless explicitly stated otherwise. In other words, the phrase "based on" means both "based only on" and "based at least on".

The "means" in the configuration of each of the above devices may be replaced with "unit", "circuit", "device", and the like.

Any reference to an element using a designation such as "first", "second", and the like used in the present disclosure generally does not limit the amount or order of those elements. Such designations can be used in the present disclosure as a convenient method to distinguish between two or more elements. Thus, the reference to the first and second elements does not imply that only two elements can be adopted, or that the first element must precede the second element in some or the other manner.

In the present disclosure, the used terms "include", "including", and variants thereof are intended to be inclusive in a manner similar to the term "comprising". Furthermore, the term "or" used in the present disclosure is intended not to be an exclusive disjunction.

In the present disclosure, for example, during translation, if articles such as "a", "an", and "the" in English are added, in the present disclosure, these articles shall include plurality of nouns following these articles.

The terms "determining" and "determining" used in the present disclosure sometimes encompass a wide variety of operations. For example, "determining" and "deciding" can include judging, calculating, computing, processing, deriving, investigating, looking up, search, or inquiry (for example, search in a table, a database, or another data structure), and ascertaining which are considered as "determining" or "deciding". In addition, "determining" and "deciding" can include receiving (for example, receiving information), transmitting (for example, transmitting information), "input", "output", and "accessing" (for example, accessing data in a memory) which are considered as "determining" or "deciding". In addition, "determining" and "deciding" can include resolving, selecting, choosing, establishing, and comparing which are considered as "determining" or "deciding". That is, the "determining" and "deciding" can include any operation considered as "determining" or "deciding". In addition, "determining (deciding)" may be read as "assuming", "expecting", "considering", and the like.

In the present disclosure, the term "A and B are different" may mean "A and B are different from each other". Note that the term may mean "A and B are each different from C". Terms such as "leave", "coupled", or the like may also be interpreted in the same manner as "different".

Although the present disclosure has been described in detail above, it will be obvious to those skilled in the art that the present disclosure is not limited to the embodiments described in the present disclosure. The present disclosure can be implemented as modifications and variations without departing from the spirit and scope of the present disclosure as defined by the claims. Therefore, the description of the present disclosure is for the purpose of illustration, and does not have any restrictive meaning to the present disclosure.

Reference Signs List

| | |
|---|---|
| 10 | Radio communication system |
| 20 | NG-RAN |
| 100A, 100B | gNB |
| UE | 200 |
| 210 | Radio signal transceiver |
| 220 | Amplifier |
| 230 | Modulation/demodulation unit |
| 240 | Control signal/reference signal processing unit |
| 250 | Encoding/decoding unit |
| 260 | Data transceiver |
| 270 | Control unit |
| 1001 | Processor |
| 1002 | Memory |
| 1003 | Storage |
| 1004 | Communication device |
| 1005 | Input device |
| 1006 | Output device |
| 1007 | Bus |

**Claims**

1. A terminal comprising:

   a receiving unit that receives a physical downlink control channel; and
   a control unit that assumes that a size of control information transmitted via the physical downlink control channel is small in a second state different from a first state.

2. The terminal according to claim 1, wherein the control unit assumes a downlink control information format having a small size in the second state.

3.  A terminal comprising:

    a receiving unit that receives a physical downlink control channel; and
    a control unit that assumes that at least any of resources in a frequency direction and a time direction of the
    physical downlink control channel increases in a second state different from a first state.

4.  The terminal according to any one of claims 1 to 3, further comprising a transmitting unit that transmits capability
    information of the terminal regarding reception of the physical downlink control channel to a network.

# FIG. 1

# FIG. 2

Radio Frame (10ms)

| #0 | #1 | #2 | #3 | #4 | #5 | #6 | #7 | #8 | #9 |

Sub frame (1ms)

SUBCARRIER SPACING

Slot (14-symbol)

15kHz

| #0 | #1 | #2 | #3 | #4 | #5 | #6 | #7 | #8 | #9 | #10 | #11 | #12 | #13 |

Slot (14-symbol)

30kHz

Slot (14-symbol)

60kHz

Slot (14-symbol)

120kHz

Slot (14-symbol)

240kHz

EP 4 152 846 A1

# FIG. 3

200

- 210 RADIO SIGNAL TRANSCEIVER
- 220 AMPLIFIER
- 240 CONTROL SIGNAL/ REFERENCE SIGNAL PROCESSING UNIT
- 230 MODULATION/ DEMODULATION UNIT
- 250 ENCODING/ DECODING UNIT
- 260 DATA TRANSCEIVER
- 270 CONTROLLER UNIT

EP 4 152 846 A1

## FIG. 4

MCL evaluation results for FR1

## FIG. 5

MCL evaluation results for FR2

# FIG. 6

PDCCH
payload size : 24 bits
number of PRBs : 3
number of symbols : 2

slot

Control-resource set
48

3

2

SCH
payload size : 7-8 bits
number of PRBs : 1
number of symbols : 14
modulation : QPSK
coding rate : 30/1024

1

14

PUCCH
payload size : 1 bits
number of PRBs : 1
number of symbols : 2

1

2

# FIG. 7

| Field (Item) | DCI 0_0 | DCI 0_1 | DCI 0_2 | DCI 0_x |
|---|---|---|---|---|
| Identifier for DCI formats | 1 | 1 | 1 | 1 |
| Carrier indicator | – | 0, 3 | 0, 1, 2, 3 | |
| UL/SUL Indicator | 0, 1 | 0, 1 | 0, 1 | |
| Bandwidth part indicator | – | 0, 1, 2 | 0, 1, 2 | |
| Frequency domain resource assignment | Variable | Variable | Variable | Variable |
| Time domain resource assignment | 4 | | 0, 1, 2, 3, 4, 5, 6 | 0, 1, 2, 3, 4 |
| Frequency Hopping Flag | 1 | 0, 1 | 0, 1 | 0, 1 |
| Modulation and coding scheme | 5 | 5 | 5 | 2 |
| New data indicator | 1 | 1 | 1 | 1 |
| Redundancy version | 2 | 2 | 0, 1, 2 | |
| HARQ process number | 4 | 4 | 0, 1, 2, 3, 4 | |
| Dwonlink assignment index (DAI) | – | 1, 2, 4 | 0, 1, 2, 4 | |
| 1st Downlink assignment index | – | 1, 2 | 1, 2 | |
| 2nd Downlink assignment index | – | 0, 2 | 0, 2 | |
| TPC command for scheduled PUSCH | 2 | 2 | 2 | 0, 2 |
| SRS resource indicator | – | 0, 1, 2, 3, 4 | 0, 1, 2, 3, 4 | |
| Precoding information and number of layers | – | 0, 1, 2, 3, 4, 5, 6 | | |
| Antenna ports | – | 2, 3, 4, 5 | 0, 2, 3, 4, 5 | |
| SRS request | – | 2, 3 | 0, 2, 3 | |
| CSI request | – | 0, 1, 2, 3, 4, 5, 6 | 0, 1, 2, 3, 4, 5, 6 | |
| CBG transmission information | – | 0, 2, 4, 6, 8 | 0, 2, 4, 6, 8 | |
| PTRS-DMRS Association | – | 0, 2 | 0, 2 | |
| beta_offsetr Indicator | – | 0, 2 | 0, 1, 2 | |
| DMRS Sequence Initialization | – | 0, 1 | 0, 1 | |
| UL-SCH Indicator | – | 1 | 1 | 1 |

# FIG. 8

| Field (Item) | DCI 1_0 | DCI 1_1 | DCI 1_2 | DCI 1_x |
|---|---|---|---|---|
| Identifier for DCI formats | 1 | 1 | 1 | 1 |
| Carrier indicator | – | 0, 3 | 0, 1, 2, 3 | |
| Bandwidth part indicator | | 0, 1, 2 | 0, 1, 2 | |
| Frequency domain resource assignment | Variable | Variable | Variable | Variable |
| Time domain resource assignment | 4 | 0, 1, 2, 3, 4 | 0, 1, 2, 3, 4 | 0, 1, 2, 3, 4 |
| VRB–to–PRB mapping | 1 | 0, 1 | 0, 1 | |
| PRB bundling size indicator | – | 0, 1 | 0, 1 | |
| Rate matching indicator | – | 0, 1, 2 | 0, 1, 2 | |
| ZP CSI–RS Trigger | – | 0, 1, 2 | 0, 1, 2 | |
| Modulation and coding scheme [TB1] | – | 5 | 5 | 2 |
| New data indicator [TB1] | 1 | 1 | 1 | 1 |
| Redundancy version [TB1] | 2 | 2 | 0, 1, 2 | |
| Modulation and coding scheme [TB2] | – | 5 | 0 | |
| New data indicator [TB2] | – | 1 | 0 | |
| Redundancy version [TB2] | – | 2 | 0 | |
| HARQ process number | 4 | 4 | 0, 1, 2, 3, 4 | |
| Downlink assignment index | 2 | 0, 2, 4 | 0, 1, 2, 4 | |
| TPC command for scheduled PUCCH | 2 | 2 | 2 | 0, 2 |
| PUCCH resource indicator | 2 | 2 | 2 | 2 |
| PDSCH–to–HARQ_feedback timing indicator | 3 | 0, 1, 2, 3 | 0, 1, 2, 3 | |
| Antenna port(s) and number of layers | – | 4, 5, 6 | 0, 4, 5, 6 | |
| Transmission configuration indication | – | 0, 3 | 0, 1, 2, 3 | |
| SRS request | – | 2, 3 | 0, 2, 3 | |
| CBG transmission information(CBGTI) | – | 0, 2, 4, 6, 8 | 0 | |
| CBG flushing out information(CBGFI) | – | 0, 1 | 0 | |
| DMRS sequence initialization | – | 1 | 0, 1 | |

# FIG. 9A

Interleaving
  R : Interleaver size : non/2
REG-bundle
  L : REG bundle sixe : 6

☐ REG bundle

$N^{CORESET}_{RB}$:
48 PRBs

REG number

| REG bundle i | CCE j Non interleaved | CCE j R = 2 |
|---|---|---|
| 15 | 15 | 15 |
| 14 | 14 | 7 |
| 13 | 13 | 14 |
| 12 | 12 | 6 |
| 11 | 11 | 13 |
| 10 | 10 | 5 |
| 9 | 9 | 12 |
| 8 | 8 | 4 |
| 7 | 7 | 11 |
| 6 | 6 | 3 |
| 5 | 5 | 10 |
| 4 | 4 | 2 |
| 3 | 3 | 9 |
| 2 | 2 | 1 |
| 1 | 1 | 8 |
| 0 | 0 | 0 |

$N^{CORESET}_{symb}$:
2 OFDM symbols

Rel-15 (L = 6)

24

# FIG. 9B

Interleaving
R : Interleaver size : non/3/6
REG-bundle
L : REG bundle sixe : 2

$N^{CORESET}_{RB}$ :
48 PRBs

$N^{CORESET}_{symb}$ :
2 OFDM symbols

| REG bundle i | CCE j Non interleaved | CCE j R = 3 | CCE j R = 6 |
|---|---|---|---|
| 47 |  | 15 | 15 |
| 46 | 15 | 14 | 13 |
| 45 |  | 13 | 11 |
| 44 |  | 12 | 9 |
| 43 | 14 | 11 | 7 |
| 42 |  | 10 | 5 |
| 41 |  | 6 | 3 |
| 40 | 13 | 8 | 1 |
| 39 |  | 7 | 15 |
| 38 |  | 6 | 13 |
| 37 | 12 | 5 | 11 |
| 36 |  | 4 | 9 |
| 35 |  | 3 | 7 |
| 34 | 11 | 2 | 5 |
| 33 |  | 1 | 3 |
| 32 |  | 0 | 1 |
| 31 | 10 | 15 | 15 |
| 30 |  | 14 | 13 |
| 29 |  | 13 | 11 |
| 28 | 9 | 12 | 9 |
| 27 |  | 11 | 7 |
| 26 |  | 10 | 5 |
| 25 | 8 | 9 | 3 |
| 24 |  | 8 | 1 |
| 23 |  | 7 | 14 |
| 22 | 7 | 6 | 12 |
| 21 |  | 5 | 10 |
| 20 |  | 4 | 8 |
| 19 | 6 | 3 | 6 |
| 18 |  | 2 | 4 |
| 17 |  | 1 | 2 |
| 16 | 5 | 0 | 0 |
| 15 |  | 15 | 14 |
| 14 |  | 14 | 12 |
| 13 | 4 | 13 | 10 |
| 12 |  | 12 | 8 |
| 11 |  | 11 | 6 |
| 10 | 3 | 10 | 4 |
| 9 |  | 9 | 2 |
| 8 |  | 8 | 0 |
| 7 | 2 | 7 | 14 |
| 6 |  | 6 | 12 |
| 5 |  | 5 | 10 |
| 4 | 1 | 4 | 8 |
| 3 |  | 3 | 6 |
| 2 |  | 2 | 4 |
| 1 | 0 | 1 | 2 |
| 0 |  | 0 | 0 |

Rel-15 (L = 2)

# FIG. 9C

Interleaving
  R : Interleaver size : non
REG-bundle
  L : REG bundle sixe : 6

CCE j

REG bundle i          Non interleaved

$N^{CORESET}_{RB}$ :
48 PRBs

REG number

$N^{CORESET}_{symb}$ :
6 OFDM symbols

Proposal (L = 6)

# FIG. 10

ControlResourceSet information element

```
-- ASN1START
-- TAG-CONTROLRESOURCESET-START

ControlResourceSet : : =              SEQUENCE  [
        controlResourceSetId                  ControlResourceSetId,

        frequencyDomainResources              BIT STRING  (SIZE (45)),
        duration                              INTEGER  (1. .maxCoReSetDuration), or ENUMERATED [ n1, n2, n3, n4, n6, n12 ] ,
        cce-REG-MappingType                   CHOICE  [
                interleaved                           SEQUENCE [
                        reg-BundleSize                        ENUMERATED [ n2, n3, n4, n6 ] ,
                        interleaverSize                       ENUMERATED [ n2, n3, n4, n6 ] ,
                        shiftIndex                            INTEGER (0. .maxNrofPhysicalResourceBlocks-1)           OPTIONAL  -- Need S
                        cceSize                               ENUMERATED [ n4, n6, n12 ] ,
                ],
                nonInterleaved                        NULL
        ],
        precoderGranularity                   ENUMERATED [sameAsREG-bundle, allContiguousRBs],
        tci-StatesPDCCH-ToAddList             SEQUENCE (SIZE (1 . .maxNrofTCI-StatesPDCCH)) OF TCI -StateId OPTIONAL,  -- Cond NotSIB1-initialBWP
        tci-StatesPDCCH-ToReleaseList         SEQUENCE (SIZE (1 . .maxNrofTCI-StatesPDCCH)) OF TCI -StateId OPTIONAL,  -- Cond NotSIB1-initialBWP
        tci-PresentInDCI                          ENUMERATED [enabled]                                   OPTIONAL,  -- Need S
        pdcch-DMRS-ScramblingID                   INTEGER (0 . .65535)                                   OPTIONAL,  -- Need S
        . . .
}

-- TAG-CONTROLRESOURCESET-STOP
-- ASN1STOP
```

# FIG. 11

☐ CCE

Configured
based on Rel-15  # of aggregation = 3

$N^{CORESET}_{RB}$:
12 PRBs

| | | | |
|---|---|---|---|
| | | | |
| | | | |
| | | | |
| | | | |
| | | | |
| 12 | 13 | | |
| 10 | 11 | | |
| 8 | 9 | | |
| 6 | 7 | | |
| 4 | 5 | | |
| 2 | 3 | | |
| 0 | 1 | | |

Aggregated

$N^{CORESET}_{symb}$:
2 OFDM symbols

# FIG. 12

ControlResourceSet information element

```
-- ASN1START
-- TAG-CONTROLRESOURCESET-START

ControlResourceSet : : =               SEQUENCE  {
       controlResourceSetId                ControlResourceSetId,

       frequencyDomainResources            BIT STRING  (SIZE (45)),
       duration                            INTEGER  (1. .maxCoReSetDuration),
       cce-REG-MappingType                 CHOICE {
              interleaved                      SEQUENCE {
                     reg-BundleSize                   ENUMERATED { n2, n3, n6 } ,
                     interleaverSize                  ENUMERATED { n2, n3, n6 } ,
                     shiftIndex                       INTEGER (0. .maxNrofPhysicalResourceBlocks-1)          OPTIONAL  -- Need S
                     interleaverSize                  ENUMERATED { n2, n3, n6 } ,
                     timeDomainAggregation            ENUMERATED { n1, n2, n3 } ,
              },
              nonInterleaved                  NULL
       },
       precoderGranularity                 ENUMERATED {sameAsREG-bundle, allContiguousRBs},
       tci-StatesPDCCH-ToAddList           SEQUENCE (SIZE (1 . .maxNrofTCI-StatesPDCCH)) OF TCI -StateId OPTIONAL, -- Cond NotSIB1-initialBWP
       tci-StatesPDCCH-ToReleaseList       SEQUENCE (SIZE (1 . .maxNrofTCI-StatesPDCCH)) OF TCI -StateId OPTIONAL, -- Cond NotSIB1-initialBWP
       tci-PresentInDCI                        ENUMERATED {enabled}                              OPTIONAL, -- Need S
       pdcch-DMRS-ScramblingID                 INTEGER (0 . .65535)                              OPTIONAL, -- Need S
       . . .
}

-- TAG-CONTROLRESOURCESET-STOP
-- ASN1STOP
```

EP 4 152 846 A1

# FIG. 13

☐ CCE

Configured
based on Rel-15  # of repetition = 3

$N^{CORESET}_{RB}$:
12 PRBs

| | |
|---|---|
| 12 | 13 |
| 10 | 11 |
| 8 | 9 |
| 6 | 7 |
| 4 | 5 |
| 2 | 3 |
| 0 | 1 |

$N^{CORESET}_{symb}$:
2 OFDM symbols

Repeated

# FIG. 14

| | PRB | symbol | REG bundle size | Aggregation level | Payload size |
|---|---|---|---|---|---|
| ------- | 48 | 2 | 6 | 16 | 24 |
| —·— | 6 | 6 | 6 | 6 | 12 |
| —— | 6 | 6 | 6 | 6 | 24 |

# FIG. 15

200

```
        ┌─────────────────────────────────────────────────┐
        │   1001          1007           1004             │
        │ ┌──────────┐           ┌──────────────┐         │
        │ │PROCESSOR │─────●─────│COMMUNICATION │         │
        │ │          │     │     │   DEVICE     │         │
        │ └──────────┘     │     └──────────────┘         │
        │                  │                              │
        │   1002           │            1005             │
        │ ┌──────────┐     │     ┌──────────────┐         │
        │ │ MEMORY   │─────●─────│   INPUT      │         │
        │ │          │     │     │   DEVICE     │         │
        │ └──────────┘     │     └──────────────┘         │
        │                  │                              │
        │   1003           │            1006             │
        │ ┌──────────┐     │     ┌──────────────┐         │
        │ │ STORAGE  │─────●─────│   OUTPUT     │         │
        │ │          │           │   DEVICE     │         │
        │ └──────────┘           └──────────────┘         │
        └─────────────────────────────────────────────────┘
```

## INTERNATIONAL SEARCH REPORT

| International application No. |
| --- |
| PCT/JP2020/019366 |

**A. CLASSIFICATION OF SUBJECT MATTER**
Int. Cl. H04W72/04(2009.01)i
FI: H04W72/04 136

According to International Patent Classification (IPC) or to both national classification and IPC

**B. FIELDS SEARCHED**

Minimum documentation searched (classification system followed by classification symbols)
Int. Cl. H04W72/04

Documentation searched other than minimum documentation to the extent that such documents are included in the fields searched
Published examined utility model applications of Japan      1922-1996
Published unexamined utility model applications of Japan    1971-2020
Registered utility model specifications of Japan            1996-2020
Published registered utility model applications of Japan    1994-2020

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
| --- | --- | --- |
| X | JP 2019-9791 A (QUALCOMM INC.) 17 January 2019, | 1-2 |
| Y | paragraphs [0057], [0085], [0086] | 4 |
| A | | 3 |
| | | |
| X | LG Electronics, Details on DCI contents for MTC | 1-2 |
| Y | [online], 3GPP TSG-RAN WG1 #82b R1-155366, | 4 |
| | Internet <URL: | |
| | http://www.3gpp.org/ftp/tsg_ran/WG1_RL1/TSGR1_82b/ | |
| | Docs/R1-155366.zip>, 09 October 2015, pp. 1-6, | |
| | chapter 2 | |

☒ Further documents are listed in the continuation of Box C.  ☒ See patent family annex.

| | |
| --- | --- |
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| 03.12.2020 | 15.12.2020 |

| Name and mailing address of the ISA/ | Authorized officer |
| --- | --- |
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

**EP 4 152 846 A1**

**INTERNATIONAL SEARCH REPORT**

| International application No. |
| --- |
| PCT/JP2020/019366 |

C (Continuation).    DOCUMENTS CONSIDERED TO BE RELEVANT

| Category* | Citation of document, with indication, where appropriate, of the relevant passages | Relevant to claim No. |
| --- | --- | --- |
| X | Sony, NB-PDCCH Design for NB-IoT[online], 3GPP TSG RAN WG1 adhoc_LTE_NB-IoT_1601, R1-160175, Internet <URL: http://www.3gpp.org/ftp/tsg_ran/WG1_RL1/TSGR1_AH/LTE_NB-IoT_1601/Docs/Rl-160175.zip>, 20 January 2016, pp. 1-3, chapter 2 | 3 |
| Y | US 2019/0230499 A1 (HFI INNOVATION INC.) 25 July 2019, paragraphs [0010], [0040] | 4 |

Form PCT/ISA/210 (continuation of second sheet) (January 2015)

## INTERNATIONAL SEARCH REPORT

| International application No. |
| --- |
| PCT/JP2020/019366 |

**Box No. II      Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III      Observations where unity of invention is lacking (Continuation of item 3 of first sheet)**

This International Searching Authority found multiple inventions in this international application, as follows:

(See extra sheet.)

1. ☐ As all required additional search fees were timely paid by the applicant, this international search report covers all searchable claims.

2. ☒ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**      ☐ The additional search fees were accompanied by the applicant's protest and, where applicable, the payment of a protest fee.

☐ The additional search fees were accompanied by the applicant's protest but the applicable protest fee was not paid within the time limit specified in the invitation.

☐ No protest accompanied the payment of additional search fees.

Form PCT/ISA/210 (continuation of first sheet (2)) (January 2015)

INTERNATIONAL SEARCH REPORT
Information on patent family members

International application No.

PCT/JP2020/019366

| Patent Documents referred to in the Report | Publication Date | Patent Family | Publication Date |
|---|---|---|---|
| JP 2019-9791 A | 17.01.2019 | US 2014/0044056 A1 paragraphs [0064], [0092], [0093] WO 2014/025381 A1 CN 104521307 A | |
| US 2019/0230499 A1 | 25.07.2019 | WO 2018/059174 A1 CN 108243630 A | |

Form PCT/ISA/210 (patent family annex) (January 2015) **INTERNATIONAL SEARCH REPORT**

| International application No. |
|---|
| PCT/JP2020/019366 |

(Continuation of Box No. III)

Document 1: JP 2019-9791 A (QUALCOMM INC.) 17 January 2019, paragraphs [0057], [0085], [0086] & US 2014/0044056 A1, paragraphs [0064], [0092], [0093] & WO 2014/025381 A1 & CN 104521307 A

The claims are classified into the following two inventions.

(Invention 1) Claims 1-2 and 4

Document 1 indicates that a UE receives a PDCCH (corresponding to a "physical downlink control channel" of the present application), and that a UE that is in an state (corresponding to a "second state" of the present application) of strengthened DL coverage is assumed to receive a more compact downlink control information format (corresponding to processing "assuming that the control information transmitted via the physical downlink control channel has a small size" in the present application). It is clear that the state of strengthened DL coverage is different from a state without coverage strengthening. Claims 1-2 are therefore deprived of novelty by document 1, and thus do not have a special technical feature.

Claim 4 is found to have the special technical feature of being a "terminal" that is "provided with a receiving unit for receiving a physical downlink control channel,

a control unit for assuming that the control information transmitted via the physical downlink control channel has a small size in a case of a second state different from a first state", and a "transmission unit for transmitting capability information of the terminal pertaining to receipt of the physical downlink control channel to a network".

As such, claims 1-2 and 4 are classified as Invention 1.

(Invention 2) Claim 3

Claim 3 has in common with claim 1 classified as Invention 1 the technical feature of being a "terminal" that is provided with a "receiving unit for receiving a physical downlink control channel", and being a "case of a second state different from a first state".

Document 1, however, discloses the UE for receiving the DCI. This technical feature does not make a contribution over the prior art in the light of the content disclosed in document 1, and thus cannot be said to be a special technical feature. Moreover, no other identical or corresponding special technical feature exists between claim 3 and claim 1.

Form PCT/ISA/210 (extra sheet) (January 2015)

Form PCT/ISA/210 (patent family annex) (January 2015) **INTERNATIONAL SEARCH REPORT**

| International application No. |
| --- |
| PCT/JP2020/019366 |

In addition, claim 3 is not a dependent claim of claim 1. Furthermore, claim 3 is not substantially identical to or similarly closely related to claim 1.

As such, claim 3 cannot be classified as Invention 1.

Accordingly, claim 3 is classified as Invention 2.

Form PCT/ISA/210 (extra sheet) (January 2015)

**REFERENCES CITED IN THE DESCRIPTION**

**Non-patent literature cited in the description**

- New SID on NR coverage enhancement. *RP-193240, 3GPP TSG RAN Meeting #86, 3GPP,* December 2019